Europäisches Patentamt

European Patent Office

Office européen des brevets

(11) Veröffentlichungsnummer: **0 303 606**
**B1**

(12) **EUROPÄISCHE PATENTSCHRIFT**

(45) Veröffentlichungstag der Patentschrift: 27.06.90

(21) Anmeldenummer: 87902495.8

(22) Anmeldetag: 11.04.87

(86) Internationale Anmeldenummer:
PCT/EP87/00200

(87) Internationale Veröffentlichungsnummer:
WO 87/06314 22.10.87 Gazette 87/23

(51) Int. Cl.⁵: **F 16 D 23/04**

(54) **SYNCHRONISIERRING.**

(30) Priorität: 16.04.86 PCt/ep86/00222

(43) Veröffentlichungstag der Anmeldung:
22.02.89 Patentblatt 89/08

(45) Bekanntmachung des Hinweises auf die
Patenterteilung:
27.06.90 Patentblatt 90/26

(84) Benannte Vertragsstaaten:
DE FR GB SE

(56) Entgegenhaltungen:
EP-A-01 623 93
DE-A-2 055 345
DE-A-3 122 522
DE-A-3 532 672
DE-C-2 744 994
DE-C-3 412 779
FR-A-1 535 343
FR-A-2 538 482
GB-A-1 137 332

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: CHRISTIAN, Klaus
St. Michaelsweg 2
D-7997 Immenstaad (DE)

(74) Vertreter: Raue, Reimund
Zahnradfabrik Friedrichshafen AG Löwentaler
Strasse 100 Postfach 2520
D-7990 Friedrichshafen 1 (DE)

Courier Press, Leamington Spa, England.

**Beschreibung**

Die Erfindung betrifft einen Synchronisierring nach dem Oberbegriff von Patentanspruch 1. Ein derartiger Synchronring ist nach der DE—C—3412779 bekannt. Dabei werden Reibflächenbeschichtung und Stützring durch einen Verbundwerkstoff gebildet.

Weiterhin sind Synchronisierringe bekannt, die aus den unterschiedlichsten metallischen Werkstoffen, durch Gießen, Sintern usw., hergestellt werden — DE—A—20 55 345; DE—C—31 22 522 —. Die Reibflächen werden durch Spritzen, Streusintern, Bekleben — DE—C—27 44 994 — oder auch durch Belegen der Reibfläche eines Synchronringes und Anschweißen derselben erzeugt — EP—A—01 62 393 —. Wie diese genannten Schriften zeigen, ist es auch schon bekannt, die Reibfläche zum Ausräumen von Schmieröl mit Nuten oder Vertiefungen zu versehen.

Solche Synchronisierringe haben sich in den verschiedensten Kombinationen von Herstellverfahren für den Ring selbst, dessen Belegung mit einer Reibschicht und der Anbringung von Drainagevertiefungen in Abhängigkeit von der Beanspruchung und dem Aufbau der Synchronisiereinrichtung, bewährt. Allen Synchronisierringen gemeinsam sind aber, wenn hohe Anforderungen gestellt werden, ein hoher technologischer Aufwand und hohe Kosten.

Es ist deshalb Aufgabe der Erfindung, einen Synchronisierring in einer Synchronisiereinrichtung nach dem Oberbegriff von Patentanspruch 1 weiterzuentwickeln, insbesondere den Herstellaufwand und dammit die Herstellkosten zu verringern.

Diese Aufgabe wird mit den kennzeichnenden Merkmalen von Patentanspruch 1 erfüllt.

Die Profilierung des gesamten Synchronisierringes ist technologisch einfach, und es können auf diese Weise optimale Verhältnisse zwischen der eigentlichen Reibfläche und den vertiefungen oder Nuten preisgünstig hergestellt werden.

Dieses Verfahren ermöglicht je nach Reibwerkstoff eine Profilierung bereits im ebenen Zustand und eine Beschichtung sowohl vor wie auch nach der Profilierung oder auch erst nach Fertigstellung des Synchronisierringes mit den konischen Flächen. Besondere Vorteile ergeben sich, wenn beide konischen Flächen als Reibflächen benutzt werden.

Mit den Ansprüchen 2 bis 8 wird die Erfindung in vorteilhafter Weise ausgestaltet.

Bei zwei Reibflächen und in Verbindung mit einer geschickten Profilierung und Dimensionierung ergibt sich eine erhebliche Vergrößerung der Reibfläche bei gleichzeitiger Optimierung der für den Öltransport angeordneten Vertiefungen. Damit ist es möglich, die Schaltkraft zu reduzieren, die thermische Belastung zu verringern und die Schaltung zu beschleunigen.

In Verbindung mit einer Molybdän-Maßbeschichtung auf beiden Reibflächen des im Prinzip fertigen Synchronisierringes ist bei relativ geringem Fertigungsaufwand eine hohe Belastung und Lebensdauer gegeben.

Abber auch vor dem Profilieren und Formprägen angebrachte Sinterschichten sind in Verbindung mit einem Synchronisierring mit einer wie auch mit zwei Reibflächen vorteilhaft, weil dann die Herstellung des Ringes mit der notwendigen Egalisierung der Beschichtung verbunden werden kann. Als Ausgangswerkstoff ist sowohl eine Ronde, ein Rohr aber auch Bandmaterial kostengünstig möglich.

Weitere Einzelheiten der Erfindung werden anhand von Ausführungsbeispielen und Zeichnungen erläutert.

Es zeigen:

Fig. 1 ein Synchronisierring in Draufsicht;

Fig. 2 ein Synchronisierung im Schnitt;

Fig. 3 ein Ausschnitt aus Fig. 1 mit Profilierung.

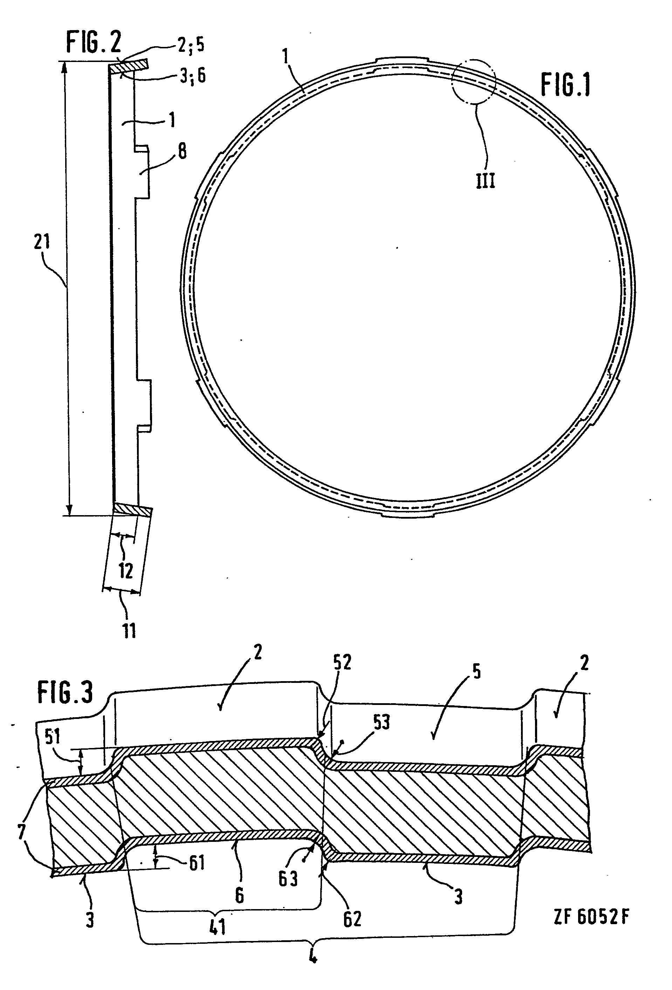

Der Synchronisierring 1 nach den Figuren 1 bis 3 hat zwei zueinander parallele konische Flächen 2, 3, die durch Profilierung—Hohlprägen—des gesamten Synchronisierringes 1 so unterbrochen sind, daß die Vertiefungen 5, 6 auf der einen Seite die konische Fläche 1, 2 auf der anderen Seite ergeben. Die Teilung 41 für die Profilierung—Profil 4—, die in Umfangsrichtung verläuft, soll dabei etwa 1/50 des Außendurchmessers 21 vom Synchronisierring 1 und etwa gleichmäßig sein. Je nach dem Aufbau der Schaltkupplung mit einer oder zwei Reibpaarungen in der Synchronisiereinrichtung können eine konische Fläche 2, 3, vorrangig jedoch beide mit einer Reibschicht 7 beschichtet sein. Die Prägetiefe 51, 61 des fertigen Synchronisierringes 1 soll im Bereich von 0,4 bis 0,8 mm liegen, und der jeweilig nach außen gerichtete Radius 52, 62 sollte 0,4 bis 1,0 mm und der innere Radius 53, 63 0,7 bis 1,2 mm betragen.

Eine oder vorrangig beide konischen Flächen 2, 3 können mit einer Molybdän-Maßbeschichtung 7, die wie bekannt auf den fertigen Ring 1 aufgebracht wird, versehen sein. Es ist aber auch möglich, das Ausgangsmaterial, z.B. einen aus einer Ronde ausgestanzten Ring, mit einer Streusinterschicht zu belegen und die Fertigbearbeitung—Profilierung und Formprägen—danach vorzunehmen. Die für die Form notwendigen Arbeitsstufen sind dabei mit den Egalisierungsarbeitsgängen für den Streusinterbelag zusammengelegt. Die Herstellung des Synchronisierringes 1 ist neben dem Ausstanzen eines flachen Ringes aus Plattenmaterial und dem anschließenden Profilieren und Formen auch aus einem Rohrabschnitt als Rohling möglich. Aber auch die Fertigung aus Bandmaterial in der Gesamtbreite 11 des Synchronisierringes 1 ist möglich, wobei durch Ablängen, evtl. in Verbindung mit einseitigem Formschneiden auf Breite der Reibfläche 12, anschließendem Runden und Schweißen, ein entsprechender Rohling ähnlich dem Rohrabschnitt, jedoch schon mit Mitnahmeprofil 8 zur Verfügung steht.

Bezugszeichen

1 Synchronisierring

11 Gesamtbreite

12 Reibflächenbreite
2 äußere konische Fläche
21 Außendurchmesser
3 innere konische Fläche
4 Profil—Profilierung
41 Teilung
5 Vertiefung
51 Prägetiefe
52 Außenradius
53 Innenradius
6 Vertiefung
61 Prägetiefe
62 Außenradius
63 Innenradius
7 Reibschicht
8 Mitnahmeprofil

**Patentansprüche**

1. Spanlos geformter Synchronisierring (1) für eine Synchronisiereinrichtung in einer Schaltkupplung eines Fahrzeuggetriebes mit zur Getriebeachse konisch angeordneter, unterbrochener und beschichteter Reibfläche, dadurch gekennzeichnet, daß der Synchronisierring (1) zwei zueinander parallele konische Flächen (2, 3) hat, die durch Profilierung (4)—Hohlprägen—des gesamten Synchronisierringes (1) in Umfangsrichtung so unterbrochen sind daß Vertiefungen (5, 6) auf der einen Seite die konische Fläche (2, 3) auf der anderen Seite ergeben, und daß eine oder beide Flächen (2, 3) als Reibflächen mit einer Reibflächenbeschichtung (7) ausgebildet sind.

2. Synchronisierring nach Anspruch 1, dadurch gekennzeichnet, daß die Teilung (41) der Profilierung (4) in Umfangsrichtung zwischen einer Reibfläche (2, 3) und einer Vertiefung (5, 6) gleichmäßig ist, wobei die Vertiefung (5) am Außendurchmesser die Erhebung und damit der Reibfläche (3) am Innendurchmesser bildet.

3. Synchronisierring nach Anspruch 2, dadurch gekennzeichnet, daß die Teilung (41) der Profilierung etwa 1/50 des Außendurchmessers (21) vom Synchronisierring (1) ist, und daß die Prägetiefe (Vertiefung 5, 6) im Bereich von 0,4 bis 0,8 mm, der jeweilige außere Radius (52, 62) der Prägung 0,4 bis 1,0 mm und der innere Radius (53, 63) 0,7 bis 1,2 mm beträgt.

4. Synchronisierring nach Anspruch 1, dadurch gekennzeichnet, daß die in Umfangsrichtung unterbrochene Reibfläche (2) oder die unterbrochenen Reibflächen (2, 3) eine Molybdän-Maßbeschichtung aufweisen.

5. Synchronisierring nach Anspruch 1, dadurch gekennzeichnet, daß die in Umfangsrichtung unterbrochene Reibfläche oder die unterbrochenen Reibflächen eine Sinterschicht aufweisen.

6. Synchronisierring nach Anspruch 1, dadurch gekennzeichnet, daß der Synchronisierring (1) aus einer Ronde ausgeschnitten, profiliert, konisch geformt, und daß die Reibflächen maßbeschichtet sind.

7. Synchronisierring nach Anspruch 1, dadurch gekennzeichnet, daß der Synchronisierring (1) aus einem Rohrabschnitt geformt, profiliert, und daß die Reibflächen maßbeschichtet sind.

8. Synchronisierring nach Anspruch 1, dadurch gekennzeichnet, daß der Synchronisierring (1) aus Bandmaterial, abgelängt, profiliert, gerundet, geschweißt, kalibriert und die Reibflächen maßbeschichtet sind.

**Revendications**

1. Bague de synchronisation (1) formée sans enlèvement de copeaux, pour un synchroniseur dans un embrayage d'une transmission pour véhicules, à surface de friction interrompue et revêtue ayant une disposition conique par rapport à l'axe de la transmission, caractérisée en ce que la bague de synchronisation (1) présente deux surfaces coniques (2, 3) mutuellement parallèles qui sont interrompues en direction circonférentielle par profilage (4)—notamment par matriçage—de toute la bague (1) de façon que la formation de creux (5, 6) ménagés sur un côté détermine la surface conique (2, 3) sur l'autre côté, et en ce qu'au moins l'une desdites surfaces (2, 3) est agencée en surface de friction pourvue d'un revêtement de friction (7).

2. Bague de synchronisation selon la revendication 1, caractérisée en ce que le pas circonférentiel (41) du profilage (4) est uniforme pour une surface de friction (2, 3) et pour un creux (5, 6), et en ce que le creux ((5) ménagé par rapport au diamètre extérieur détermine une bosse et donc la surface de friction (3) présentant le diamètre intérieur.

3. Bague de synchronisation selon la revendication 2, caractérisée en ce que le pas (41) du profilage est sensiblement égal à 1/50 du diamètre extérieur (21) de la bague (1), et en ce que la profondeur de matriçage (creux 5, 6) est de 0,4 à 0,8 mm, le rayon extérieur (52, 62) de matriçage est de 0,4 à 1,0 mm et le rayon intérieur (53, 63) est de 0,7 à 1,2 mm.

4. Bague de synchronisation selon la revendication 1, caractérisée en ce que la surface de friction (2) interrompue en direction circonférentielle ou les surfaces de friction interrompues (2, 3) comportent un revêtement au molybdène.

5. Bague de synchronisation selon la revendication 1, caractérisée en ce que la surface de friction interrompue en direction circonférentielle ou les surfaces de friction interrompues comportent une couche frittée.

6. Bague de synchronisation selon la revendication 1, caractérisée en ce que ladite bague (1) est découpée dans un flan, profilée, mise en forme conique, et en ce que les surfaces de friction sont revêtues.

7. Bague de synchronisation selon la revendication 1, caractérisée en ce que ladite bague (1) est formée à partir d'un tronçon de tube, profilée, et en ce que les surfaces de friction sont revêtues.

8. Bague de synchronisation selon la revendication 1, caractérisée en ce que ladite bague (1) est découpée sous la forme d'une longueur d'un matériau en bande, profilée, cintrée, soudée, calibrée, et en ce que les surfaces de friction sont revêtues.

## Claims

1. Synchronizing ring (1) which is formed in a chipless manner for a synchronizing device in a clutch of a vehicle transmission, comprising a discontinuous and coated friction surface, which is arranged conically with respect to the transmission axis, characterised in that the synchronizing ring (1) has two conical surfaces (2, 3) which are parallel to one another and are made discontinuous in the circumferential direction by profiling (4)—embossing—the entire synchronizing ring (1)) so as to produce indentations (5, 6) on one side and the conical surface (2, 3) on the other side, and that one or both surfaces (2, 3) are formed as friction surfaces with a friction surface coating (7).

2. Synchronizing ring according to claim 1, characterised in that the pitch (41) of the profiling (4) in the circumferential direction between a friction surface (2, 3) and an indentation (5, 6) is uniform, the indentation (5) forming the elevation at the outside diameter and thus the friction surface (3) at the inside diameter.

3. Synchronizing ring according to claim 2, characterised in that the pitch (41) of the profiling is approximately 1/50 of the outside diameter (21) of the synchronizing ring (1), and that the embossed depth (indentation 5, 6) is in the range of 0.4 to 0.8 mm, the respective outer radius (52, 62) of the embossing 0.4 to 1.0 mm and the inner radius (53, 63) 0.7 to 1.2 mm.

4. Synchronizing ring according to claim 1, characterised in that the friction surface (2) which is discontinuous in the circumferential direction of the discontinuous friction surfaces (2, 3) comprise(s) a standard molybdenum coating.

5. Synchronizing ring according to claim 1, characterised in that the friction surface which is discontinuous in the circumferential direction or the discontinuous friction surfaces comprise(s) a sinter layer.

6. Synchronizing ring according to claim 1, characterised in that the synchronizing ring (1) is punched out of a circular blank, profiled and formed into a cone, and that the friction surfaces are coated in a standard manner.

7. Synchronizing ring according to claim 1, characterised in that the synchronizing ring (1) is formed from a tube section and profiled, and that the friction surfaces are coated in a standard manner.

8. Synchronizing ring according to claim 1, characterised in that the synchronizing ring (1) is cut to length from strip material, profiled, rounded, welded, checked for size and the friction surfaces are coated in a standard manner.

EP 0 303 606 B1

FIG.2

FIG.1

FIG.3

ZF 6052 F

1